# EUROPÄISCHE PATENTSCHRIFT

(11) **EP 0 847 918 B1**
(45) Veröffentlichungstag und Bekanntmachung des Hinweises auf die Patenterteilung: **02.04.2003**
(21) Anmeldenummer: 97117298.6
(22) Anmeldetag: 07.10.1997
(51) Int. Cl.: B64D 33/02, F02C 7/055

(54) **Lufteinlauf für Triebwerke**
Air intake for an engine
Entrée d'air pour moteur

(30) Priorität: 11.12.1996 DE 19651491
(43) Veröffentlichungstag der Anmeldung: 17.06.1998
(73) Patentinhaber: Astrium GmbH, 81663 München (DE)
(72) Erfinder: Engel, Herbert, 83052 Bruckmühl (DE); Broll, Hubert, 85579 Neubiberg (DE); Weinreich, Hermann-L., Dr., 85521 Ottobrunn (DE)
(74) Vertreter: Ulrich, Thomas

(56) Entgegenhaltungen:
- EP-A- 0 646 525
- US-A- 3 659 424
- US-A- 4 307 743
- US-A- 5 337 975

## Beschreibung

Die vorliegende Erfindung betrifft einen Lufteinlauf für Triebwerke, insbesondere Staustrahl- und Staustrahlraketentriebwerke von Flugkörpern, welche primär von Trägerflugzeugen mitgeführt und von diesen gestartet werden (bzw. welche vom Boden gestartet werden), mit einer im wesentlichen rechtwinkeligen Einlaufkontur, mit einem Grenzschicht-Luftableitkanal, mit einer die Einlaufkontur abdeckenden innenliegenden Verschlussklappe und mit einem Betätigungsmechnismus zum Öffnen des Einlaufeintrittsquerschnittes und des Grenzschicht-Luftableitkanales.

Triebwerke, deren Einläufe mit Verschlussklappen versehen sind, sind vielfältig bekannt. So beschreibt z.B. die DE-PS 42 35 631 der Anmelderin einen querschnittsgeregelten Rechtecklufteinlauf, bei dem sich im unteren Teil des Einlaufes zwischen planparallelen Seitenwänden eine schwenkbare Verstellrampe befindet, die eine grosse Variation des Eintrittsquerschnittes und damit des Luftdurchsatzes ermöglicht. Ein zwischen der Verstellrampe und einer oberen festen Stosswellenrampe befindlicher Diffusorteil ermöglicht bei geringer interner Querschnittskontraktion ein Schlucken der Eintrittskopfwelle und ein nachfolgendes Aufbauen einer internen Überschallkompression. Durch eine Hilfsklappe, die sich unterhalb der Verstellrampe bis zu einem zwischen den Seitenwänden angeordneten Verbindungssteg erstreckt, ist der untere Strömungsabschluss gewährleistet. Mit diesem Lufteinlauf wird es ermöglicht, für den gesamten Machzahlbereich eine widerstandsarme Durchsatzregelung bei geringstmöglichem Aussenwiderstand zu erzielen.

Die externe und interne Geometrie des Lufteinlaufs nicht nur für Triebwerke von Flugzeugen, sondern auch für Triebwerke von Flugkörpern ist durch die Betriebsbedingungen festgelegt. Insbesondere bei luftgestarteten Flugkörpern ist es im Allgemeinen zwingend erforderlich, durch verschiebbare Teile des Lufteinlaufs oder durch Verschlussklappen den Lufteinlauf vor dem Starten des Triebwerkes zu verschliessen.

Aufgabe der vorliegenden Erfindung ist es, einen Lufteinlauf mit einer Verschlussklappe und mit einem die Verschlussklappe öffnendem Betätigungsmechanismus zu schaffen, mit dem Diffusorbrummen während des Überschalltrag- und Boost-Fluges sowie ein Eindringen von Fremdkörpern verhindert wird und die empfindlichen Einlaufvorderkanten weitestgehend vor Erosion im Tragflug sowie gegen Verbeulen aufgrund von unsachgemäßer Behandlung am Boden (Transport, Be- und Entladen etc.) geschützt werden und der zugleich eine widerstandsarme Umströmung beim Tragflug und Boostflug ermöglicht.

Ausgehend von einem Lufteinlauf der eingangs näher genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Die erfindungsgemäss ausgestaltete Verschlussklappe samt ihrem Betätigungsmechanismus bietet nicht nur ein vollständiges Abdecken des Eintrittsquerschnittes und der Einlauf-vorderkanten und damit einen weitestgehenden Schutz gegen Erosion, insbesondere während des Tragfluges, sondern zugleich auch ein Abdecken des im Lufteinlauf üblicherweise vorgesehenen Grenzschicht-Luftableitkanals, solange das Triebwerk nicht gezündet ist. Während der Handhabung des Lufteinlaufes samt dem zugehörigen Triebwerk auf den Boden versteift die Verschlussklappe den Lufteinlauf dahingehend, dass ein hoher mechanischer Schutz gegen Beulen und Verformung erzielt wird. Ferner ist unter Berücksichtigung der Einlaufgeometrie der Luftwiderstand in optimaler Weise reduziert, da die Verschlussklappe an die Begrenzungsgeometrie des Einlaufkanals anschliesst und somit die angeströmte Kontur optimal flach gehalten werden kann.

Im folgenden wird die Erfindung anhand der Zeichnung näher erläutert, in der ein vorteilhaftes Ausführungsbeispiel dargestellt ist. Es zeigen:
- Figur 1: einen senkrechten Schnitt in Längsrichtung durch einen erfindungsgemässen Lufteinlauf in der geschlossenen Stellung der Verschlussklappe;
- Figur 2: einen Parallelschnitt durch den Lufteinlauf von Figur 1;
- Figur 3: einen senkrechten Schnitt in Längsrichtung durch den erfindungsgemässen Lufteinlauf in geöffneter Stellung der Verschlussklappe;

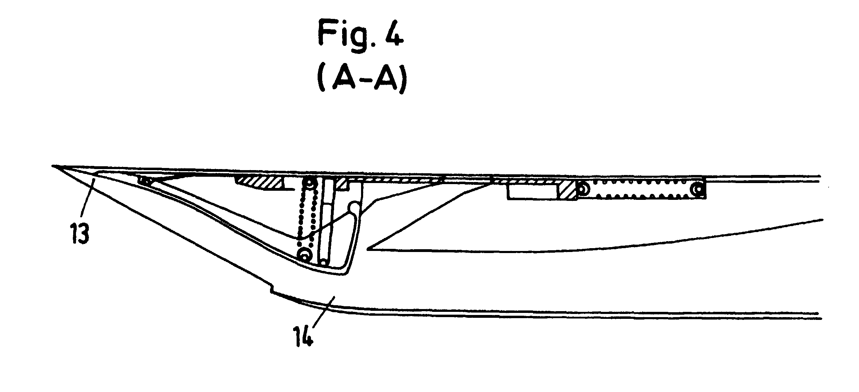

- Figur 4: einen senkrechten Schnitt in Längsrichtung durch den Lufteinlauf mit teilweise geöffneter Verschlussklappe, und

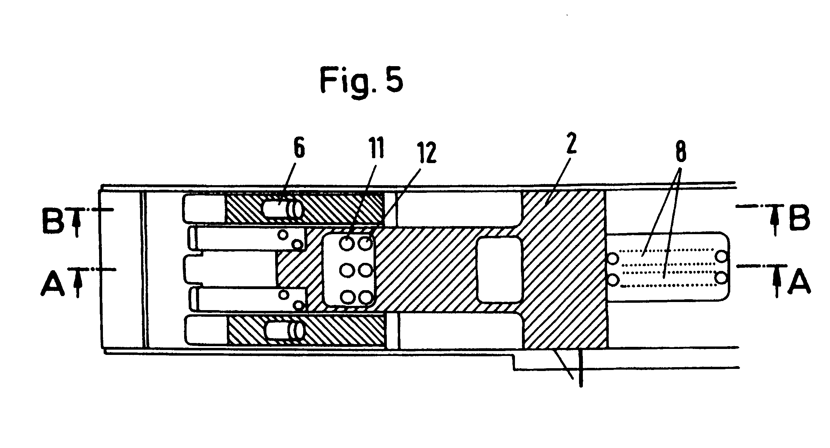

- Figur 5: einen waagrechten Schnitt in Längsrichtung durch den erfindungsgemässen Lufteinlauf.

In den Figuren, in denen gleiche Teile mit gleichen Bezugszeichen versehen sind, ist der Lufteinlauf für ein Triebwerk eines Flugkörpers schematisch dargestellt, der z.B. dazu dient, von Trägerflugzeugen mitgeführt und während des Fluges gestartet zu werden. Der Lufteinlauf soll sowohl während seiner Handhabung auf den Boden, als auch während des Fluges bis zum Startvorgang verschlossen sein, um einmal das Eindringen von Fremdkörpern wie Hagel, Steine, Vögel oder Wasser zu verhindern und zum anderen den Lufteinlauf, der beim dargestellten Ausführungsbeispiel einen rechtwinkeligen Querschnitt aufweist, derart auszusteifen, dass er nicht aus der Grundform gebracht und/oder örtlich eingebeult werden kann. Zugleich sollen die angeschärften umlaufenden Kanten der Einlaufkontur des Lufteinlaufes in Flugrichtung gegen jegliche Erosion während des Tragfluges dadurch geschützt werden, dass sie keine exponierte Lage aufweisen.

In den Figuren ist mit 1 die die Einlaufkontur vollständig verschliessende, an sie angepasste und in ihrer Verschlussstellung die angeschärften Vorderkanten abdeckende Verschlussklappe bezeichnet, die einstückig ausgebildet ist und mit einem Betätigungsmechanismus verbunden ist.

Neben der Verschlussklappe 1 ist ein an der Innenseite und in Längsrichtung des Lufteinlaufes angeordneter Schieber 2 vorgesehen, welcher den Grenzschicht-Luftableitkanal 3 abdeckt.

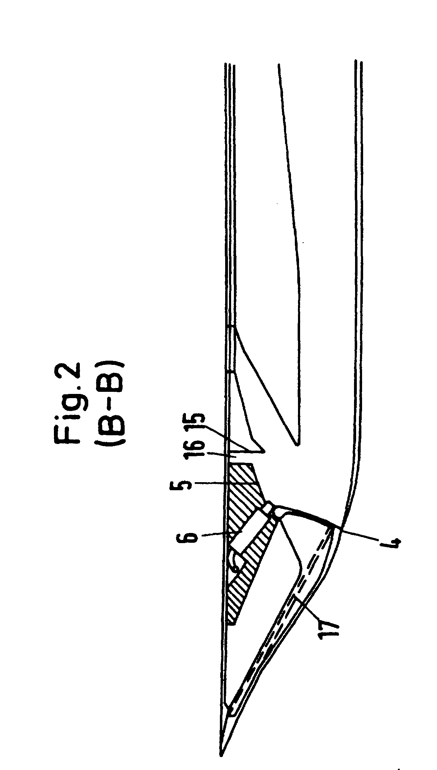

Wie Figur 2 erkennen lässt, wird die Verschlussklappe 1 durch Anliegen an der Einlaufkontur 4 sowie durch Anliegen an einer Führungsrampe 5 gehalten, wobei letztere mit einer Verriegelungsanordnung 6 versehen ist, beispielsweise einen mit einem pyrotechnisch betätigbaren Zylinder versehenen Riegel. Ausserdem wird die Verschlussklappe 1 in ihrem, in Strömungsrichtung gesehen vorderen Bereich, durch ein Blattfedersystem 7 an die Einlaufkontur 4 des Einlaufkanals gedrückt. Das Blattfedersystem 7 ist mit einem Schieber 2 verbunden.

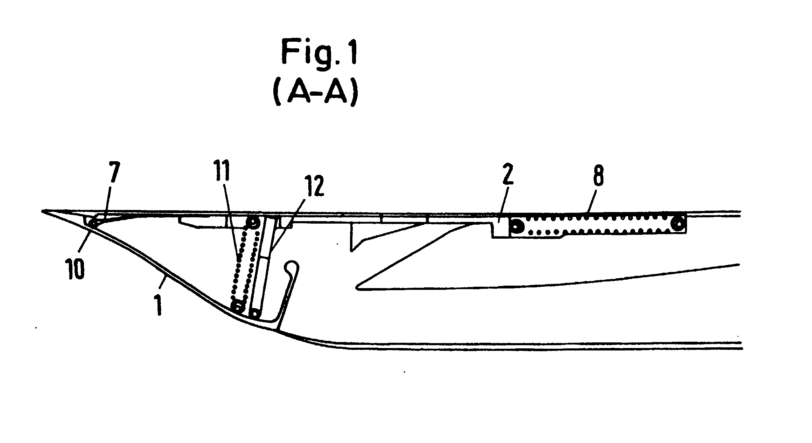

In der in den Figuren 1 und 2 dargestellten Stellung der Verschlussklappe 1, in der also der Lufteinlauf verschlossen ist, wird der Flugkörper mit dem zugehörigen Triebwerk an einem Trägerflugzeug für den Einsatz mitgeführt. Auch während der Beschleunigungsphase durch das in den Flugkörper integrierte Starttriebwerk bleibt dabei der Einlaufkanal verschlossen. Die Verschlussklappe verhindert dabei das Diffusorbrummen in der Beschleunigungsphase und das Eindringen von Fremdkörpern in den Lufteinlauf. Dabei ist die Verschlussklappe derart angeordnet, dass die angeschärften umlaufenden Kanten der Einlaufkontur in Flugrichtung keine exponierte Lage haben, d.h. dass die Erosion während des Tragfluges ausschliesslich auf die Verschlussklappe wirkt.

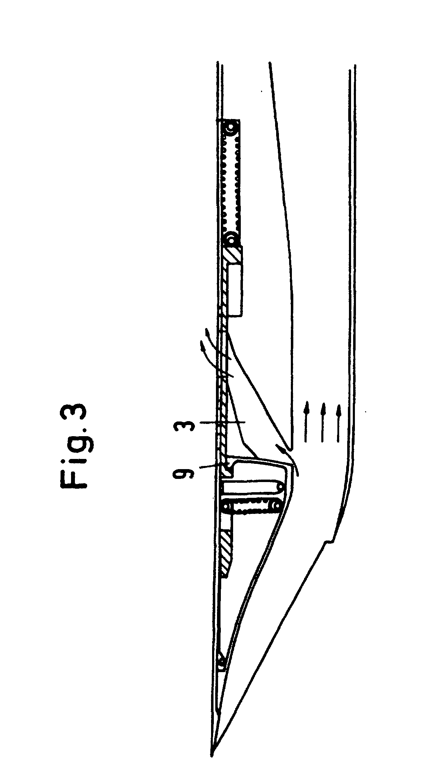

Die Einlaufgeometrie in der Betriebsstellung gemäss Figur 3, in der die Verschlussklappe in ihrer geöffneten Stellung dargestellt ist, ist unabänderlich vorgegeben, wobei ein Teilbereich der innenliegenden Kontur zu einer Verschlussklappe umfunktioniert werden kann. Beim gewählten Ausführungsbeispiel ist es gelungen, den Anstellwinkel der Verschlussklappe in optimaler Weise flach zu gestalten, so dass dadurch der aerodynamische Widerstand äusserst niedrig ist.

Nach Ende der Beschleunigungsphase, beispielsweise bei einer Geschwindigkeit von ≧ Ma 2, wird nun das Triebwerk in Betrieb genommen, wobei die Verschlussklappe 1 für den Lufteinlauf innerhalb einiger ms ihre in Figur 3 gezeigte geöffnete Betriebsstellung einnehmen muss.

Durch Aktivierung der Verriegelungsanordnung 6 wird der durch Zugfedern 8 vorgespannte Schieber 2 freigegeben und beaufschlagt, unterstützt von den auf die Verschlussklappe 1 wirkenden Luftkräften, die Verschlussklappe in Richtung ihrer mit 9 bezeichneten Offenstellung, wobei die in Strömungsrichtung gesehen hintere Kante der Verschlussklappe 1 an der Führungsrampe 5 entlang gleitet. Der in Nuten geführte Schieber 2 ist über das Blattfedersystem 7 mit der Klappe an der Stelle 10 verbunden. Beim dargestellten Ausführungsbeispiel unterstützen noch Zugfedern 11 die Verschiebung der Verschlussklappe, wobei um den zeitlichen Verlauf beeinflussen zu können, ein Dämpfungskolbensystem 12 vorgesehen ist.

Um dem konstruktiven Aufbau des Lufteinlaufs zu entsprechen, ist vorteilhafterweise die Führungsrampe 5 derart dimensioniert, dass die vordere Kontur 13 der Verschlussklappe 1 bereits ihre Offenstellung einnimmt und dabei in eine erste Rasteinrichtung einrastet, wenn der Luftkanal 14 nur teilweise geöffnet ist. Der hintere Rand der Verschlussklappe 1 gleitet entlang der Führungsrampe 5 bis zu einer Gegenbegrenzung 15 und wird in einer Nut 16 in Längsrichtung fixiert und in einer zweiten Rasteinrichtung festgehalten.

Die Verschlussklappe 1 verfügt zusätzlich an ihren seitlichen Flanken über ein Dichtungslippensystem 17. Die Fixierung der Verschlussklappe 1, wie sie in Figur 3 dargestellt ist, erfolgt zum einen durch das Blattfedersystem 7 in Verbindung mit dem Schieber 2 und zum anderen durch die Zugfedern 11 und einen an den Seitenflanken der Verschlussklappe angeordneten, nicht dargestellten Rastmechanismus.

## Patentansprüche

1. Lufteinlauf für luftatmende Triebwerke für Überschallfluggeschwindigkeit, insbesondere Staustrahl- und Staustrahlraketentriebwerke von Flugkörpern, mit einer im wesentlichen rechtwinkligen Einlaufkontur, mit einem Grenzschicht-Luftableitkanal, mit einer die Einlaufkontur abdeckenden innen liegenden Verschlussklappe und mit einem Betätigungsmechanismus zum Öffnen der Verschlussklappe, **dadurch gekennzeichnet, dass** die Verschlussklappe einstückig ausgebildet ist und derart an die Einlaufkontur angepasst ist, dass sie in ihrer Verschlussstellung den Lufteinlauf vollständig derart abdeckt, dass alle umlaufenden angeschärften Vorderkanten abgedeckt sind und dadurch gegen Erosion, Fremdkörpereindringen und Verformung geschützt sind.

2. Lufteinlauf nach Anspruch 1, **dadurch gekennzeichnet, dass** der Betätigungsmechanismus zum Öffnen der Verschlussklappe eine Führungsrampe aufweist, an der die in Strömungsrichtung gesehen hintere Kante der Verschlussklappe in ihre Offenstellung gleiten kann sowie eine Verriegelungsanordnung aufweist, die die Verschlussklappe in ihrer geschlossenen Stellung hält.

3. Lufteinlauf nach Anspruch 2, **dadurch gekennzeichnet, dass** die Verriegelungsanordnung einen mit einem pyrotechnisch betätigbaren Zylinder verbundenen Riegel aufweist.

4. Lufteinlauf nach einem der vorhergehenden Ansprüche, **dadurch gekennzeichnet, dass** der Betätigungsmechanismus mindestens eine die Verschlussklappe in Richtung ihrer Offenstellung mit einer Vorspannung beaufschlagenden Zugfeder aufweist.

5. Lufteinlauf nach einem der vorhergehenden Ansprüche, **dadurch gekennzeichnet, dass** der Betätigungsmechanismus ein den zeitlichen Ablauf des Öffnens der Verschlussklappe steuerndes Dämpfungssystem aufweist.

6. Lufteinlauf nach einem der vorhergehenden Ansprüche, **dadurch gekennzeichnet, dass** die in Strömungsrichtung gesehen vordere Kante der Verschlussklappe mit einem Blattfedersystem verbunden ist, dass die Verschlussklappe in Richtung des Anliegens an die Einlaufkontur beaufschlagt.

7. Lufteinlauf nach einem der vorhergehenden Ansprüche, **dadurch gekennzeichnet, dass** das Blattfedersystem mit einem an der Oberseite und an der Innenseite des Lufteinlaufs angeordneten, in Längsrichtung verschiebbar gelagerten Schieber verbunden ist, der in Verschlussstellung der Verschlussklappe den Grenzschicht-Luftableitkanal verschliesst und der in Offenstellung der Verschlussklappe den Grenzschicht-Luftableitkanal frei gibt.

8. Lufteinlauf nach Anspruch 7, **dadurch gekennzeichnet, dass** der Schieber mit einer Zugfeder verbunden ist, die ihn in Richtung seiner, den Grenzschicht-Luftableitkanal freigebenden Stellung mit einer Vorspannung beaufschlagt.

9. Lufteinlauf nach einem der vorhergehenden Ansprüche, **dadurch gekennzeichnet, dass** in der Nähe der vorderen Kante der Verschlussklappe eine erste Rasteinrichtung an der Innenseite des Lufteinlaufs vorgesehen ist, in die die Verschlussklappe während des Öffnens des Lufteinlaufes bereits einrastet, bevor ihre hintere Kante ihre Endstellung erreicht hat.

10. Lufteinlauf nach einem der vorhergehenden Ansprüche, **dadurch gekennzeichnet, dass** die beiden seitlichen, sich gegenüberliegenden Seitenflanken der Verschlussklappe mit Dichtlippen versehen sind.

## Revendications

1. Entrée d'air pour réacteurs aérobies destinés à des vols à vitesse supersonique, notamment pour statoréacteurs et moteurs-fusées de missiles, comportant un contour d'entrée sensiblement rectangulaire, un canal d'évacuation d'air de couche limite, un volet de fermeture situé à l'intérieur recouvrant le contour d'entrée, et un mécanisme d'actionnement destiné à l'ouverture du volet de fermeture, **caractérisée en ce que** le volet de fermeture est agencé d'un seul tenant, et est adapté au contour d'entrée de telle sorte que, dans sa position fermée, il recouvre entièrement l'entrée d'air, et que tous les bords périphériques avant acérés soient recouverts, et protégés ainsi contre l'érosion, la pénétration de corps étrangers et une déformation.

2. Entrée d'air selon la revendication 1, **caractérisée en ce que** le mécanisme d'actionnement pour l'ouverture du volet de fermeture comporte une rampe de guidage, le long de laquelle le bord arrière du volet de fermeture, vu dans le sens de l'écoulement, peut glisser dans sa position ouverte, ainsi qu'un dispositif de verrouillage qui retient le volet de fermeture dans sa position fermée.

3. Entrée d'air selon la revendication 2, **caractérisée en ce que** le dispositif de verrouillage comporte un verrou relié à un cylindre pouvant être actionné par voie pyrotechnique.

4. Entrée d'air selon l'une quelconque des revendications précédentes, **caractérisée en ce que** le mécanisme d'actionnement comporte au moins un ressort de traction qui exerce une précontrainte sur le volet de fermeture vers sa position d'ouverture.

5. Entrée d'air selon l'une quelconque des revendications précédentes, **caractérisée en ce que** le mécanisme d'actionnement comporte un système d'amortissement qui pilote le déroulement dans le temps de l'ouverture du volet de fermeture.

6. Entrée d'air selon l'une quelconque des revendications précédentes, **caractérisée en ce que** le bord avant du volet de fermeture, vu dans le sens de l'écoulement, est relié à un système de ressorts à lames, qui agit en direction de la mise en application du volet de fermeture contre le contour d'entrée.

7. Entrée d'air selon l'une quelconque des revendications précédentes, **caractérisée en ce que** le système de ressorts à lames est relié à un registre disposé sur la face supérieure et sur la face intérieure de l'entrée d'air, pouvant être déplacé dans la direction longitudinale, qui obture le canal d'évacuation d'air de couche limite dans la position de fermeture du volet de fermeture, et qui libère le canal d'évacuation d'air de couche limite dans la position ouverte du volet de fermeture.

8. Entrée d'air selon la revendication 7, **caractérisée en ce que** le registre est relié à un ressort de traction, qui est précontraint dans la direction de sa position libérant le canal d'évacuation d'air de couche limite.

9. Entrée d'air selon l'une quelconque des revendications précédentes, **caractérisée en ce qu'**un premier dispositif d'encliquetage est prévu sur la face intérieure de l'entrée d'air à proximité du bord avant du volet de fermeture, dans lequel le volet de fermeture s'encliquette déjà pendant l'ouverture de l'entrée d'air avant que son bord arrière ait atteint sa position finale.

10. Entrée d'air selon l'une quelconque des revendications précédentes, **caractérisée en ce que** les deux flancs latéraux opposés du volet de fermeture sont munis de lèvres d'étanchéité.

## Claims

1. Air intake for air-breathing engines for supersonic flight, in particular ram jet engines and ram rocket engines of flying objects, having a substantially orthogonal intake contour, having a boundary layer air discharge duct, having an inner closure shutter which covers the intake contour and having an actuation mechanism for opening the closure shutter, **characterised in that** the closure shutter is constructed in one piece and is conformed to the intake contour in such a manner that it completely covers the air intake in the closed position thereof whereby all of the peripheral scarfed front edges are covered and are thereby protected against erosion, introduction of foreign bodies and deformation.

2. Air intake according to claim 1, **characterised in that** the actuation mechanism for opening the closure shutter has a guide ramp, on which the rear edge of the closure shutter, when viewed in the direction of flow, can slide into the open position thereof and has a locking arrangement which holds the closure shutter in the closed position thereof.

3. Air intake according to claim 2, **characterised in that** the locking arrangement has a lock which is connected to an explosively actuatable cylinder.

4. Air intake according to any one of the preceding claims, **characterised in that** the actuation mechanism has at least one tension spring which acts on the closure shutter, biased in the direction of the open position thereof.

5. Air intake according to any one of the preceding claims, **characterised in that** the actuation mechanism has an attenuation system which controls the timing of the opening of the closure shutter.

6. Air intake according to any one of the preceding claims, **characterised in that** the front edge of the closure shutter, when viewed in the direction of flow, is connected to a leaf spring system which acts on the closure shutter in the direction of abutment against the intake contour.

7. Air intake according to any one of the preceding claims, **characterised in that** the leaf spring system is connected to a slide which is arranged at the upper side and on the inner face of the air intake and which is mounted for displacement in the longitudinal direction and which, in the closed position of the closure shutter, closes the boundary layer air discharge duct and which, in the open position of the closure shutter, opens the boundary layer air discharge duct.

8. Air intake according to claim 7, **characterised in that** the slide is connected to a tension spring which acts on the slide, biased in the direction of the position thereof which opens the boundary layer air discharge duct.

9. Air intake according to any one of the preceding claims, **characterised in that** a first engaging device, in which the closure shutter engages during the opening of the air intake even before the rear edge thereof has reached the end position thereof, is provided on the inner face of the air intake near the front edge of the closure shutter.

10. Air intake according to any one of the preceding claims, **characterised in that** the two lateral mutually opposing side flanks of the closure shutter are provided with sealing lips.
